# FASCICULE DE BREVET EUROPEEN

(11) **EP 1 135 776 B1**
(45) Date de publication et mention de la délivrance du brevet: **12.10.2005**
(21) Numéro de dépôt: 99973162.3
(22) Date de dépôt: 29.11.1999
(51) Int. Cl.: G21F 9/30

(54) **CONFINEMENT DU CESIUM ET/OU DU RUBIDIUM DANS DES CERAMIQUES APATITIQUES**
EINSCHLUSS VON CAESIUM UND/ODER RBIDIUM IN APATITKERAMIK
CONFINEMENT OF CAESIUM AND/OR RUBIDIUM IN APATITE CERAMICS

(30) Priorité: 30.11.1998 FR 9815043
(43) Date de publication de la demande: 26.09.2001
(73) Titulaire: COMMISSARIAT A L'ENERGIE ATOMIQUE, 75752 Paris Cédex 15 (FR)
(72) Inventeur: CARPENA, Joelle, F-134 90 Jouques (FR); SENAMAUD, Nadège, F-87000 Limoges (FR); BERNACHE-ASSOLANT, Didier, F-87100 Limoges (FR); LACOUT, Jean-Louis, F-31000 Toulouse (FR); PIN, Christian, F-63000 Clermont-Ferrand (FR)
(74) Mandataire: Audier, Philippe André
(86) Numéro de dépôt international: PCT/FR1999/002945
(87) Numéro de publication internationale: WO 2000/033321

(56) Documents cités:
- WO-A-95/02886
- US-A- 4 442 028
- KRYUKOVA, A.I. ET AL: "Structure and hydrolytic stability of apatite crystals containing Cs and Sr." SOVIET RADIOCHEMISTRY (JAN 1993) V. 34(3) P. 409-413. COVER-TO-COVER TRANSLATION OF RADIOKHIMIYA (USSR). CODEN: SVRDAX ISSN: 0038-576X, XP002113452 United States
- BOGDANOV, R.V. ET AL: "Possibility of incorporating high-level wastes in ceramic matrices based on natural rocks." RADIOCHEMISTRY (NEW YORK) (MAY 1995) V. 36(5) P. 522-531. TRANSLATED FROM RADIOKHIMIYA;36: NO. 5, 470-479(SEP-OCT 1994). CODEN: RDIOEO ISSN: 1066-3622, XP002113453 United States

## Description

### Domaine technique

La présente invention a pour objet un procédé pour fixer le césium et/ou le rubidium dans une phase minérale de confinement durable. Elle concerne plus précisément la fixation du césium et du rubidium radioactifs provenant du retraitement de combustibles irradiés.

Le césium issu du retraitement des combustibles irradiés est un produit de fission à vie longue qui présente une volatilité et une diffusibilité extrêmement élevées. Il convient donc de le fixer dans des matrices extrêmement stables.

Dans les solutions d'extraction provenant d'installations de retraitement de combustibles usés, le césium est présent sous forme des isotopes suivants : ¹³⁵Cs, ¹³⁷Cs et ¹³³Cs.

Ainsi, dans une solution obtenue à partir d'un combustible UOₓ irradié à 33000 MWj/t, de décroissance 3 ans, on trouve ces trois isotopes dans les quantités données dans le tableau 1 qui suit.

**TABLEAU 1**

| Isotope | Période | Quantités formées (g.t-1) | Energie moyenne (Kev) | Teneur isotopique |
|---|---|---|---|---|
| ¹³⁵Cs | 2,3.10⁻⁶ ans | 357 | 56,3 | 10 % |
| ¹³⁷Cs | 30 ans | 1130 | 174,3 | 31 % |
| ¹³³Cs | stable | / | | solde |

En vue d'un stockage à long terme, il est donc nécessaire de conditionner le césium dans une matrice stable physiquement et chimiquement. En effet, cet élément, non inséré dans le réseau d'une structure définie ou incorporé dans le réseau d'une structure instable, a tendance à diffuser hors de la matrice sous l'influence des agents extérieurs, notamment de l'eau. De plus, lors de l'élaboration d'un matériau de conditionnement, effectuée à haute température, le césium très volatil a du mal à s'incorporer à la matrice.

Le stockage effectif du césium demande l'incorporation dans une matrice solide qui résiste au transport, aux irradiations, qui soit stable thermiquement et qui soit inerte dans les conditions d'un stockage géologique ou d'un entreposage de longue durée.

### État de la technique antérieure

La politique actuelle pour conditionner les déchets radioactifs non séparés est la vitrification dans des verres borosilicatés. Dans ce cas, le césium est traité avec les autres déchets alors qu'il serait d'un grand intérêt de disposer de matrices spécifiques, spécialement adaptées au confinement du césium séparé des autres déchets et/ou du rubidium.

Plus récemment, on a envisagé de conditionner des déchets radioactifs en les enrobant dans une matrice apatitique contenant éventuellement les actinides et lanthanides à conditionner, comme il est décrit dans WO-A-95/02886 [1]. Cependant, ces matrices n'ont pas été conçues pour conditionner spécifiquement et séparément le césium et/ou le rubidium alors que la politique développée maintenant est de gérer séparément les radionucléides à vie longue tels que Cs. Ces radionucléides peuvent être séparés lors du retraitement, sous forme de solutions aqueuses de nitrate ou de carbonate de césium et/ou de rubidium.

### Exposé de l'invention

La présente invention a précisément pour objet de fournir une matrice de confinement destinée au conditionnement du césium et/ou du rubidium, dont la durabilité et la stabilité à long terme sont confirmées, et qui garantit non seulement le confinement du déchet mais aussi la protection de l'environnement.

Selon l'invention, le matériau de confinement du césium et/ou du rubidium radioactifs, comprend une matrice d'apatite phosphosilicatée contenant dans sa structure chimique le césium et/ou le rubidium radioactifs à confiner, cette apatite répondant à la formule suivante :

Mₜ Caₓ Ln_{y} (PO₄)₆₋ᵤ(SiO₄)ᵤ X

dans laquelle :
- M représente le Cs et/ou le Rb,
- Ln représente au moins un cation trivalent,
- X représente au moins un anion choisi parmi 2F⁻, S²⁻, 2Cl⁻, 2Br⁻, 2I⁻, 2OH⁻ et O²⁻, et
- t, x, y et u sont tels que :
   0 < t ≤ 2,5
   2 ≤ x ≤ 8
   1 ≤ y ≤ 7
   0 < u < 6
   x + y + t = 10,
   et que le nombre total de charges positives apportées par les cations M, Ca et Ln soit égal à (20 + u).

L'utilisation dans ce matériau de confinement d'une matrice d'apatite phosphosilicatée est très intéressante. En effet le ¹³⁵Cs est un émetteur β⁻ n'entraînant aucun dégât de cette matrice qui reste stable face à ces émissions. De plus, le césium étant incorporé dans le réseau même de l'apatite, il est ainsi fixé et ne peut donc pas diffuser à travers cette matrice. Enfin, l'apatite étant un matériau extrêmement stable thermiquement (jusqu'à 1200°C), l'effet thermique ¹³⁷Cs n'aura aucune conséquence. De ce fait, la séparation isotopique entre ¹³⁵Cs et ¹³⁷Cs ne sera pas nécessaire dans le cadre du conditionnement du césium.

Par ailleurs, les apatites ont une solubilité très faible dans l'eau qui diminue de plus lorsque la température augmente. Ceci est un point positif pour le conditionnement du césium, car le ¹³⁷Cs présent dans le déchet, a un fort pouvoir thermique, ce qui va impliquer une augmentation de la température dans la matrice qui le contiendra mais, dans le cas de l'apatite, diminuera la solubilité de celle-ci dans l'eau.

Selon l'invention, pour mieux évacuer la chaleur entraînée par la présence de ¹³⁷Cs dans l'apatite, on peut augmenter sa conductivité thermique en la substituant légèrement par du fer, c'est-à-dire en utilisant, par exemple, pour Ln, dans la formule donnée ci-dessus, un lanthanide et du fer.

Les apatites phosphosilicatées répondant à la formule donnée ci-dessus sont spécialement conçues pour conditionner le césium, mais elles conviennent également pour le conditionnement du rubidium. Ceci est intéressant notamment dans le cas où il n'est pas possible de séparer le rubidium du césium présents simultanément dans une solution aqueuse.

Selon l'invention, on peut faire varier la quantité t de césium et/ou de rubidium incluse dans la matrice d'apatite de 0 atome par maille à 2,5 atomes par maille. Une quantité inférieure à 0,1 atome par maille ne présente pas grand intérêt puisque cette formulation correspond seulement à 1 % massique de césium. Généralement, on préfère que la quantité de Cs et/ou Rb ne dépasse pas 1,5 atomes par maille (t ≤ 1,5) car une apatite contenant une quantité plus élevée, supérieure à 1,5 atome par maille est difficile à synthétiser en raison de la taille importante de l'ion césium.

Dans ce cas, le césium risque de se mettre non plus en substitution dans le réseau de l'apatite mais en insertion. De ce fait, en raison de sa mobilité importante, le césium serait moins lié au réseau et pourrait diffuser à travers la matrice.

De préférence, selon l'invention on utilise une apatite dans laquelle u est égal à 1, c'est-à-dire une composition contenant 5 groupements phosphate et 1 groupement silicate, car des études effectuées sur l'ensemble de la solution solide phosphate-silicate, soit pour u allant de 0 à 6, ont montré que l'on incorporait mieux le césium au sein de la structure apatitique pour la valeur de u = 1. Pour des compositions s'éloignant de cette valeur, on risque de voir le césium cristalliser dans les phases secondaires et être moins bien inclus dans la structure chimique.

Dans l'apatite phosphosilicatée répondant à la formule donnée ci-dessus, le nombre total de charges négatives est apporté par les anions PO₄³⁻, SiO₄⁴⁻ et X²⁻ Ces charges sont équilibrées par les charges positives du Ca²⁺, M⁺ et du cation trivalent Ln.

A titre d'exemple X²⁻, peut représenter (FO_{0,5})²⁻. Pour le cation trivalent Ln, on peut utiliser divers cations trivalents, en particulier ceux appartenant au groupe des lanthanides ainsi que le fer et l'aluminium. A titre d'exemple, Ln peut être constitué par La seul, La en combinaison avec Fe, ou encore Nd seul.

La présente invention a encore pour objet un procédé pour confiner le césium et/ou le rubidium dans une matrice d'apatite phosphosilicatée répondant à la formule suivante :
Mₜ Caₓ Ln_{y}(PO₄)₆₋ᵤ(SiO₄)ᵤ X
dans laquelle :
- M représente le Cs et/ou le Rb à confiner,
- Ln représente au moins un cation trivalent choisi par exemple parmi les lanthanides, le fer et l'aluminium,
- X représente au moins un anion choisi parmi 2F⁻, S²⁻, 2Cl⁻, 2Br⁻, 2I⁻, 2OH⁻ et O²⁻, et
- t, x, y et u sont tels que :
   0 < t ≤ 2,5, de préférence 0 < t ≤ 1,5
   2 ≤ x ≤ 8
   1 ≤ y ≤ 7
   0 < u < 6, de préférence u = 1
   x + y + t = 10
   et que le nombre total de charges positives apportées par les cations M, Ca et Ln soit égal à (20 + u), qui comprend les étapes suivantes :

a) préparer un composé intermédiaire de formule théorique :

   □ₜ Caₓ Ln_{y} (PO₄)₆₋ᵤ(SiO₄)ᵤ X₁₋ₜ□ₜ

   avec t, x, y et u ayant les significations données ci-dessus et □ représentant une lacune, par mélange en quantités stoechiométriques de composés contenant Ca, Ln P, O, Si et X et calcination du mélange à une température de 1200 à 1500°C,
b) introduction du Cs et/ou Rb dans ce composé intermédiaire en mélangeant une poudre de ce composé avec un composé de Cs et/ou Rb en quantité voulue pour remplir les lacunes, et en calcinant le mélange à une température de 700 à 900°C, et
c) densification de la britholite contenant le césium et/ou le rubidium obtenue en b) par frittage sous charge à une température de 900 à 1050°C, sous une pression de 25 à 35 MPa.

Ce procédé permet ainsi de réaliser la fixation et l'immobilisation du césium sous forme atomique pour fournir un matériau de confinement durable.

La première étape du procédé consiste à mélanger les réactifs appropriés, soit des composés contenant Ca, Ln, P, O, Si et X, et à calciner le mélange à une température de 1200 à 1500°C. On obtient ainsi un composé intermédiaire.

Dans la seconde étape du procédé de l'invention, on introduit le césium et/ou le rubidium dans ce composé intermédiaire en partant d'un composé de Cs et/ou Rb que l'on mélange à une poudre du composé intermédiaire en quantité voulue pour obtenir une apatite stoechiométrique, et on calcine le mélange à une température appropriée.

Le composé de Cs et/ou Rb peut être obtenu par séchage et évaporation d'une solution contenant ces éléments, obtenue après une séparation sélective.

La dernière étape du procédé consiste à densifier l'ensemble par frittage sous charge.

Dans la première étape, on peut utiliser divers composés contenant deux ou plusieurs des éléments à introduire, pour préparer le composé intermédiaire. On utilise en particulier des oxydes, des carbonates, des phosphates et/ou des fluorures de Ln, Ca et Si.

Pour synthétiser ce composé intermédiaire, on peut utiliser par exemple les réactifs suivants : Ln₂O₃, SiO₂, CaCO₃, Ca₂P₂O₇β et CaF₂.

Le pyrophosphate de calcium Ca₂P₂O₇β peut être obtenu par calcination d'hydrogénophosphate de calcium anhydre ou dihydraté (CaHPO₄ ou CaHPO₄, 2H₂O) à environ 1000°C, pendant 1 à 2 heures.

On pèse alors ces réactifs en quantité stoechiométriques en fonction de la composition chimique visée, puis on les mélange en milieu liquide dans un liquide qui peut être de l'acétone, de l'eau ou de l'alcool, par exemple jusqu'à évaporation quasi-totale du liquide. On peut sécher à une température de 100 à 150°C, choisie en fonction du liquide utilisé, par exemple pendant 2 heures en étuve pour sécher complètement la poudre. On calcine ensuite le mélange à une température de 1200 à 1500°C, pendant une durée suffisante, par exemple de 6 heures. On utilise de préférence une faible vitesse de montée en température, par exemple de 10°C/min, de façon à bien évaporer tous les résidus. On peut augmenter le temps ou la température de calcination pour obtenir un matériau parfaitement cristallisé.

Cette première étape du procédé est facile à mettre en oeuvre car on n'emploie que des réactifs non radioactifs, et elle ne nécessite donc aucune disposition particulière en ce qui concerne la protection radiologique. Le matériel utilisé, les matériaux utilisés ainsi que le personnel intervenant n'auront aucune protection à prendre. Cette première étape correspond ainsi à une synthèse de l'industrie classique.

Pour mettre en oeuvre la seconde étape du procédé de l'invention, on soumet tout d'abord la poudre du composé intermédiaire obtenue précédemment à un broyage pour qu'elle présente une granulométrie inférieure à 10 µm, puis on lui ajoute le composé de césium et/ou de rubidium, par exemple un carbonate ou un nitrate de césium et éventuellement de rubidium, en quantité stoechiométrique, et on mélange intimement en milieu liquide en suivant le même protocole que dans la première étape jusqu'à l'obtention d'une poudre parfaitement sèche. On calcine ensuite la poudre qui est constituée d'un mélange du composé intermédiaire et de réactif au césium et/ou rubidium, à une température de 700 à 900°C, par exemple de 800 à 900°C, qui dépend du réactif utilisé, par exemple, pendant 30 minutes pour éliminer le CO₂ du carbonate de césium et/ou rubidium ou le NO₂ du nitrate de césium et/ou rubidium et les incorporer dans le composé intermédiaire. On obtient ainsi une poudre de britholite au césium et/ou au rubidium.

On réalise ensuite la troisième étape du procédé de l'invention qui consiste à densifier la poudre obtenue. Dans ce but, on soumet tout d'abord la poudre à un broyage par exemple entre 3 et 5 heures, dans un liquide tel que l'alcool, l'eau, l'acétone, par attrition, avec une vitesse par exemple de l'ordre de 450 tours/minute. On peut opérer dans une jarre en nylon avec une palette en nylon et des billes de 1,5 mm de diamètre en céramique tel que le zircon ou la zircone. On diminue ainsi la taille des grains pour rendre la poudre plus réactive. A l'issue de ce broyage, on dispose d'une poudre de britholite ayant une surface spécifique de l'ordre de 5 à 10 m²/g, par exemple de 6 m²/g, ce qui correspond à une granulométrie inférieure à 10 µm, et de préférence inférieure à 5 µm.

Cette opération de broyage est indispensable car la poudre non broyée a une surface spécifique beaucoup plus faible, c'est-à-dire une granulométrie plus élevée, ce qui impliquerait de réaliser le frittage à des températures beaucoup plus élevées qui sont supérieures à la température de volatilisation du césium. Dans ce cas, celui-ci ne serait alors pas piégé dans la structure apatitique et contaminerait l'environnement.

La densification ultérieure de la poudre de britholite broyée est réalisée par frittage sous charge de manière à lui conférer une bonne tenue mécanique. On peut réaliser le frittage par compression uniaxiale. Dans ce cas, on peut utiliser un moule, de préférence en graphite, ou une matrice en graphite avec une chemise en céramique telle qu'alumine ou zircone, les pistons et contre pistons étant également de préférence en graphite, mais pouvant être en céramique telle que l'alumine ou la zircone.

De façon à favoriser le démoulage après frittage, les parois internes du moule ainsi que les extrémités des pistons et contre-pistons en contact avec la poudre, sont enduits de lubrifiants tels que nitrure de bore ou alumine, si nécessaire.

Pendant le frittage, on applique une pression uniaxiale de 25 à 35 MPa sur la poudre. Le cycle de frittage consiste en une montée en température jusqu'à la température de frittage, par exemple 900°C, suivi d'un palier à cette température pendant environ 1 heure. Une fois le retrait terminé, la pression est retirée et la descente en température de 5°C/ min est effectuée. A la fin du frittage, la pastille est démoulée sans aucune difficulté.

On obtient ainsi une britholite dense contenant le césium à confiner.

Cette étape de frittage permet d'obtenir un solide sans porosité ouverte, d'un taux de densification proche de 100 %, ayant confiné tout le césium introduit dans une phase de structure apatitique, chimiquement stable et qui peut être placé dans un fût métallique pour le transport et le stockage définitif en surface ou en stockage géologique.

D'autres caractéristiques et avantages de l'invention apparaîtront mieux à la lecture des exemples suivants, donnés bien entendu à titre illustratif et non limitatif.

### Exposé détaillé des modes de réalisation

Les exemples qui suivent illustrent la préparation d'apatites phosphosilicatées, en partant des réactifs suivants : Ln₂O₃, SiO₂, CaCO₃, Ca₂P₂O₇β et CaF₂. Le césium et le rubidium sont introduits à partir de Cs₂CO₃, CsNO₃ et RbNO₃.

### Exemple 1 : Synthèse d'une britholite dense de formule : Ca₈La_{1,3} Fe_{0,2}Cs_{0,5}(PO₄)₅(SiO₄)₁FO_{0,5}

Cette apatite contient 6,46 % massique de césium.

Pour obtenir 10 g de britholite répondant à la formule donnée ci-dessus, on prépare tout d'abord un premier mélange dans de l'acétone en utilisant les quantité suivantes :
CaCO₃ : 2,7327 g
SiO₂ : 0,5469 g
La₂O₃ : 1,955 g
Fe₂O₃ : 0,1453
Ca₂P₂O₇ : 5,7807 g
CaF₂ : 0,3553 g

Tous ces réactifs sont mélangés dans de l'acétone et le mélange est séché à l'étuve à 130°C pendant deux heures. Ce mélange est ensuite calciné à 1400°C pendant 6 heures pour faire réagir entre eux les différents réactifs et synthétiser un composé intermédiaire en poudre que l'on broie à une granulométrie inférieure à 10 µm.

La poudre obtenue est ensuite mélangée à du carbonate de césium en utilisant 0,8528 g de Cs₂CO₃. pour 10 g du composé intermédiaire. Ces deux réactifs, composé intermédiaire et réactif au césium, sont mélangés dans de l'acétone, puis séchés à 130°C. La poudre obtenue est alors calcinée à 800°C pendant une 1/2 heure. Le composé obtenu est alors broyé pendant 4 heures, par attrition à 450 tr/min de façon à ce que la granulométrie finale soit inférieure à 10 µm. Cette poudre de britholite au césium est ensuite densifiée par frittage sous charge, dans un moule en graphite avec des pistons et contre-pistons en graphite, à 900°C pendant 1 heure, avec une pression de 30 MPa appliquée dès le début du cycle. La vitesse de descente en température est de 5°C/ min.

On obtient ainsi une céramique dense contenant une phase unique : une apatite dopée au césium.

### Exemple 2 : Synthèse d'une britholite dense de formule : Ca₇Nd₂Cs₁(PO₄)₅(SiO₄)₁FO_{0,5}

Cette apatite contient 10,2 % massique de césium.

Dans ce cas, on suit le même mode opératoire que dans l'exemple 1, mais les réactifs utilisés pour la préparation du premier mélange sont présents dans les proportions suivantes :
CaCO₃ : 1,2984 g
SiO₂ : 0,5201 g
Nd₂O₃ : 2,9122 g
Ca₂P₂O₇ : 5,4981 g
CaF₂ : 0,3379 g

Après calcination du mélange de ces réactifs pour synthétiser le composé intermédiaire sans césium comme dans l'exemple 1, on introduit le césium sous forme de nitrate de césium CsNO₃. Pour 10g de composé intermédiaire sans césium, 1,6870 g de CsNO₃ sont utilisés pour introduire le césium en quantité stoechiométrique. Le mélange, après séchage, est calciné à 850°C pendant 1/2 heure. La poudre de britholite au césium est alors broyée par attrition pendant 5 heures dans de l'alcool, à la vitesse de 450 tr/min pour obtenir une granulométrie inférieure à 10 µm. La poudre est ensuite densifiée sous charge dans les mêmes conditions que celles de l'exemple 1.

On obtient ainsi une céramique dense contenant une phase unique : une apatite dopée au césium.

### Exemple 3 : Synthèse d'une britholite dense de formule : Ca₆La_{2,5}Cs_{1,5}(PO₄)₅(SiO₄)₁FO_{0,5}

Cette apatite contient 14,3 % massique de césium.

Dans ce cas, on suit le même mode opératoire que dans l'exemple 1, mais les réactifs utilisés pour la préparation du premier mélange sont présents dans les proportions suivantes :

| | |
|---|---|
| CaCO₃ | 0,8471 g |
| SiO₂ | 0,5086 g |
| La₂O₃ | 3,4460 g |
| Ca₂P₂O₇ | 5,5663 g |
| CaF₂ | 1,3218 g |

Après calcination du mélange de ces réactifs pour synthétiser le composé intermédiaire sans césium, comme dans l'exemple 1, on introduit le césium sous forme de carbonate de césium Cs₂CO₃. Pour 10 g de composé intermédiaire sans césium, 2,0678 g de Cs₂CO₃ sont utilisés pour introduire le césium en quantité stoechiométrique. Le mélange, après séchage est calciné à 800°C pendant 1/2 heure. La poudre de britholite au césium obtenue est alors broyée par attrition, pendant 4 heures, à 450 tr/min, dans de l'alcool. La poudre est ensuite densifiée sous charge dans les mêmes conditions que celles de l'exemple 1.

On obtient ainsi une céramique dense contenant une phase unique : une apatite dopée au césium.

### Exemple 4 : Synthèse d'une britholite dense de formule : Ca₇Nd₂Cs_{0,8}Rb_{0,2}(PO₄)₅(SiO₄)₁FC_{0,5}

Cette apatite contient 8,2 % massique de césium.

Dans ce cas, on suit le même mode opératoire que dans l'exemple 1, mais les réactifs utilisés pour la préparation du premier mélange sont présents dans les proportions suivantes :

| | |
|---|---|
| CaCO₃ | 1,2984 g |
| SiO₂ | 0,5201 g |
| Nd₂O₃ | 2,9122 g |
| Ca₂P₂O₇ | 5,4981 g |
| CaF₂ | 0,3379 g |

Après calcination du mélange de ces réactifs pour synthétiser le composé intermédiaire sans césium, comme dans l'exemple 1, on introduit le césium et le rubidium sous forme de nitrate de césium CsNO₃ et de nitrate de rubidium RbNO₃. Pour 10 g de composé intermédiaire, on utilise 1,1283 g de Cs₂CO₃ et 0,1277 g de RbNO₃ pour introduire le césium et le rubidium en quantités stoechiométriques. Le mélange, après séchage est calciné à 850°C pendant 1/2 heure. La poudre de britholite au césium et au rubidium est alors broyée par attrition, pendant 5 heures, dans de l'alcool, à 450 tr/min, pour obtenir une granulométrie inférieure à 10 µm. La poudre est ensuite densifiée sous charge dans les mêmes conditions que celles de l'exemple 1.

On obtient ainsi une céramique dense contenant une phase unique : une apatite dopée au césium et au rubidium.

Comme on peut le voir d'après les exemples donnés ci-dessus, le procédé de confinement du césium et/ou du rubidium conforme à l'invention présente de nombreux avantages.

En effet, une partie de l'appareillage utilisé et son environnement n'ont nul besoin d'être protégés contre les effets de la radioactivité car la synthèse du composé intermédiaire sans césium et sans rubidium peut être effectuée sans protection.

De plus, cette matrice de conditionnement ne s'adressant qu'au césium, elle est parfaitement établie pour cet élément et correspond aux propriétés requises pour son conditionnement. D'une part, en raison de sa grande capacité à accueillir le césium (de l'ordre de 10 %), on réalise des volumes relativement petits pour un stockage en site géologique. D'autre part, grâce à la grande durabilité de la structure apatitique, le stockage, dans un système ouvert où l'eau souterraine est présente, est possible. Une forte charge de déchet est possible par la présente invention car l'apatite est stable à des températures élevées et le taux de relargage dû à la corrosion chimique est faible.

Enfin, la durabilité à long terme de la structure apatitique a été confirmée par les analogues naturels retrouvés dans des environnements géologiques divers et extrêmes et sur des périodes de temps extrêmement longues. La très faible solubilité de la structure apatitique assure que le césium ne sera pas relargué des fûts et qu'il n'atteindra pas l'environnement, cet élément étant très polluant de par sa grande diffusivité et sa durée de vie très longue. Ainsi, le plus petit volume fourni par la présente invention et la plus grande durabilité, particulièrement aux températures élevées, rendent le stockage en site géologique possible.

Ainsi, la structure apatitique produite par le procédé de l'invention satisfait à tous les critères requis pour le conditionnement du césium. Le ¹³⁵Cs a une demi-vie de 2,3 millions d'années et comme il est nécessaire de l'isoler pendant au moins 10 périodes, cela fait 23 millions d'années. Ceci correspond bien à la gamme de temps pour laquelle les données du comportement géochimique des apatites naturelles sont disponibles. En particulier, des études ont été faites sur des apatites naturelles datant de plus d'un milliard d'années.

Ainsi, l'apatite est une phase extrêmement stable. En particulier, ses propriétés sont connues parce que l'apatite existe naturellement. Par exemple, les apatites sont souvent trouvées comme minéraux lourds dans les courants sédimentaires, et même après transport sur de grandes distances, l'altération chimique et la dégradation physique sont limitées. La faible altération que l'apatite subit sur des longues périodes de temps et sous des conditions extrêmes fait d'elle une structure idéale pour le conditionnement du césium.

### REFERENCE CITEE

[1] : WO-A-95/02886

## Revendications

1. Matériau de confinement du césium et/ou du rubidium radioactifs comprenant une matrice d'apatite phosphosilicatée contenant dans sa structure chimique le césium et/ou le rubidium radioactifs à confiner, cette apatite répondant à la formule suivante :
Mₜ Caₓ Ln_{y} (PO₄)₆₋ᵤ(SiO₄)ᵤ X
dans laquelle :
- M représente le Cs et/ou le Rb,
- Ln représente au moins un cation trivalent,
- X représente au moins un anion choisi parmi 2F⁻, S²⁻, 2Cl⁻, 2Br⁻, 2I⁻, 2OH⁻ et O²⁻, et
- t, x, y et u sont tels que :
0 < t ≤ 2,5
2 ≤ x ≤ 8
1 ≤ y ≤ 7
0 < u < 6
x + y + t = 10,
et que le nombre total de charges positives apportées par les cations M, Ca et Ln est égal à (20 + u).

2. Matériau selon la revendication 1, dans lequel le cation trivalent est choisi parmi les lanthanides, le fer et l'aluminium.

3. Matériau selon la revendication 1 ou 2,
dans lequel u est égal à 1.

4. Matériau selon l'une quelconque des revendications 1 à 3, dans lequel t est au plus égal à 1,5.

5. Matériau selon l'une quelconque des revendications 1 à 4, dans lequel X représente (FO_{0,5})²⁻.

6. Matériau selon l'une quelconque des revendications 1 à 5, dans lequel Ln représente 1) La, 2) La et Fe, ou 3 Nd.

7. Matériau selon l'une quelconque des revendications 1 à 6, dans lequel M représente le césium.

8. Matériau selon l'une quelconque des revendications 1 à 6, dans lequel M représente Cs et Rb.

9. Matériau selon la revendication 2, répondant à la formule :
Ca₈ La_{1,3} Fe_{0,2} Cs_{0,5}(PO₄)₅(SiO₄)₁ FO_{0,5}.

10. Matériau selon la revendication 3, répondant à la formule :
Ca₇ Nd₂ Cs₁(PO₄)₅(SiO₄)₁FO_{0.5}.

11. Matériau selon la revendication 3, répondant à la formule :
Ca₆ La_{2,5} Cs_{1,5}(PO₄)₅(SiO₄)₁ FO_{0,5}.

12. Matériau selon la revendication 3, répondant à la formule :
Ca₇ Nd₂ Cs_{0,8} Rb_{0,2} (PO₄)₅(SiO₄)₁ FO_{0,5}.

13. Procédé pour confiner le césium et/ou le rubidium dans une matrice d'apatite phosphosilicatée répondant à la formule suivante :
Mₜ Caₓ Ln_{y}(PO₄)₆₋ᵤ(SiO₄)ᵤ X
dans laquelle :
- M représente le Cs et/ou le Rb à confiner,
- Ln représente au moins un cation trivalent,
- X représente au moins un anion choisi parmi 2F⁻, S²⁻, 2Cl⁻, 2Br⁻, 2I⁻, 2OH⁻ et O²⁻, et
- t, x et y sont tels que :
0 < t ≤ 2,5
2 ≤ x ≤ 8
1 ≤ y ≤ 7
0 < u < 6
x + y + t = 10,
et que le nombre total de charges positives apportées par les cations M, Ca et Ln soit égal à (20 + u), qui comprend les étapes suivantes :
a) préparer un composé intermédiaire de formule :
□ₜ Caₓ Ln_{y} (PO₄)₆₋ᵤ(SiO₄)ᵤ X₁₋ₜ□ₜ
avec t, x, y et u ayant les significations données ci-dessus et 0 représentant une lacune, par mélange en quantités stoechiométriques de composés contenant Ca, Ln P, O, Si et X et calcination du mélange à une température de 1200 à 1500°C,
b) introduction du Cs et/ou Rb dans ce composé intermédiaire en mélangeant une poudre de ce composé intermédiaire avec un composé de Cs et/ou Rb en quantité voulue pour remplir les lacunes, et en calcinant le mélange à une température de 700 à 900°C, et
c) densification de la britholite contenant le césium et/ou le rubidium obtenue en b) par frittage sous charge à une température de 900 à 1050°C, sous une pression de 25 à 35 MPa.

14. Procédé selon la revendication 13, dans lequel l'apatite phosphosilicatée répond à la formule de la revendication 13 avec u égal à 1 et t au plus égal à 1,5.

15. Procédé selon la revendication 13 ou 14, dans lequel les composés utilisés pour préparer le composé intermédiaire sont choisis parmi les oxydes, carbonates, phosphates et fluorures de Ln, Ca et Si.

16. Procédé selon la revendication 15, dans lequel les composés utilisé pour préparer le composé intermédiaire sont Ln₂O₃, SiO₂, CaCO₃, Ca₂P₂O₇ et CaF₂.

17. Procédé selon la revendication 13 ou 14, dans lequel les composés de Cs et/ou Rb utilisés dans l'étape b) sont choisis parmi les nitrates et les carbonates.

18. Procédé selon la revendication 13 ou 14, dans lequel la poudre de composé intermédiaire utilisée dans l'étape b) a une granulométrie inférieure à 10 µm.

19. Procédé selon l'une quelconque des revendications 13 à 18, dans lequel le césium comprend du césium 135 et/ou du césium 137.

## Patentansprüche

1. Material zum Einschluss von radioaktivem Cäsium und/oder Rubidium, eine Phosphorsilikatapatit-Matrix umfassend, die in ihrer chemischen Struktur das einzuschließende radioaktive Cäsium und/oder Rubidium enthält, wobei dieses Apatit der folgenden Formel entspricht:
Mₜ Caₓ Ln_{y}(PO₄)₆₋ᵤ(SiO₄)ᵤ X
in der:
- M das Cs und/oder das Rb ist,
- Ln wenigstens ein dreiwertiges Kation ist,
- X wenigstens ein Anion ist, ausgewählt unter 2F⁻, S²⁻ 2Cl⁻, 2Br⁻, 2I⁻, 2OH⁻ und O²⁻, und
- t, x, y und u so sind, dass:
0 < t ≤ 2,5
2 ≤ x ≤ 8
1 ≤ y ≤ 7
0 < u < 6
x + y + t = 10,
und dass die Gesamtzahl der durch die M-, Ca- und Ln-Kationen getragenen positiven Ladungen gleich (20 + u) ist.

2. Material nach Anspruch 1, bei dem das dreiwertige Kation ausgewählt wird zwischen den Lanthaniden, dem Eisen und dem Aluminium.

3. Material nach Anspruch 1 oder 2, bei dem u gleich 1 ist.

4. Material nach einem der Ansprüche 1 bis 3, bei dem t höchstens gleich 1,5 ist.

5. Material nach einem der Ansprüche 1 bis 4, bei dem X (FO_{0,5})²⁻ ist.

6. Material nach einem der Ansprüche 1 bis 5, bei dem Ln 1) La, 2) La und Fe oder 3) Nd ist.

7. Material nach einem der Ansprüche 1 bis 6, bei dem M Cäsium ist.

8. Material nach einem der Ansprüche 1 bis 6, bei dem M Cs und Rb ist.

9. Material nach Anspruch 2, folgender Formel entsprechend:
Ca₈ La_{1,3} Fe_{0,2} Cs_{0,5}(PO₄)₅ (SiO₄)₁ FO_{0,5}.

10. Material nach Anspruch 3, folgender Formel entsprechend:
Ca₇ Nd₂ Cs₁(PO₄)₅(SiO₄)₁ FO_{0,5}.

11. Material nach Anspruch 3, folgender Formel entsprechend:
Ca₆ La_{2,5} Cs_{1,5}(PO₄)₅(SiO₄)₁ FO_{0,5}.

12. Material nach Anspruch 3, folgender Formel entsprechend:
Ca₇ Nd₂ Cs_{0,8} Rb_{0,2}(PO₄)₅(SiO₄)₁ FO_{0,5}.

13. Verfahren zum Einschließen von Cäsium oder Rubidium in eine Phosphosilikatapatit-Matrix, die der folgenden Formel entspricht:
Mₜ Caₓ Ln_{y}(PO₄)₆₋ᵤ(SiO₄)ᵤ X
in der:
- M das einzuschließende Cs und/oder Rb ist,
- Ln wenigstens ein dreiwertiges Kation ist,
- X wenigstens ein Anion ist, ausgewählt unter 2F⁻, S²⁻ 2Cl⁻, 2Br⁻, 2I⁻, 2OH⁻ und O²⁻, und
- t, x, y und u so sind, dass:
0 < t ≤ 2,5
2 ≤ x ≤ 8
1 ≤ y ≤ 7
0 < u < 6
x + y + t = 10,
und dass die Gesamtzahl der durch die M-, Ca- und Ln-Kationen getragenen positiven Ladungen gleich (20 + u) ist,
das die folgenden Schritt umfasst:
a) Herstellen einer Zwischenverbindung der Formel:
□ₜ Caₓ Ln_{y} (PO₄)₆₋ᵤ(SiO₄)ᵤ X₁₋ₜ□ₜ
wobei t, x, y und u die oben angegebenen Bedeutungen haben und □ jeweils eine Leerstelle bedeutet, durch das Mischen stöchiometrischer Mengen von Ca, Ln P, O, Si und X enthaltender Verbindungen und Kalzinieren der Mischung bei einer Temperatur von 1200 bis 1500 °C,
b) Hinzufügen von Cs und/oder Rb zu dieser Zwischenverbindung, indem man ein Pulver dieser Zwischenverbindung mit einer Cs- und/oder Rb-Verbindung in gewünschter Menge mischt, um die Leerstellen zu füllen, und indem man die Mischung bei einer Temperatur von 700 bis 900 °C kalziniert, und
c) Verdichten des in b) hergestellten, das Cäsium und/oder das Rubidium enthaltenden Britholits durch Sintem unter einem Druck von 25 bis 35 MPa bei einer Temperatur von 900 bis 1050 °C,

14. Verfahren nach Anspruch 13, bei dem das Phosphosilikatapatit der Formel des Anspruchs 13 entspricht, mit u gleich 1 und t gleich höchstens 1,5.

15. Verfahren nach Anspruch 13 oder 14, bei dem die zur Herstellung der Zwischenverbindung verwendeten Verbindungen ausgewählt werden unter den Oxiden, Carbonaten, Phosphaten und Fluoriden von Ln, Ca und Si.

16. Verfahren nach Anspruch 15, bei dem die zur Herstellung der Zwischenverbindung verwendeten Verbindungen Ln₂O₃, SiO₂, CaCO₃, Ca₂P₂O₇ und CaF₂ sind.

17. Verfahren nach Anspruch 13 oder 14, bei dem die in dem Schritt b) verwendeten Cs- und/oder Rb-Verbindungen unter den Nitraten und den Carbonaten ausgewählt werden.

18. Verfahren nach Anspruch 13 oder 14, bei dem das Pulver der in dem Schritt b) verwendeten Zwischenverbindung eine Korngröße unter 10 µm hat.

19. Verfahren nach einem der Ansprüche 13 bis 18, bei dem das Cäsium Cäsium 135 und/oder Cäsium 137 umfasst.

## Claims

1. Material for containing radioactive cesium and/or rubidium comprising a phosphosilicated apatite matrix including in its chemical structure the radioactive cesium and/or rubidium to be contained, this apatite corresponding to the following formula:
Mₜ Caₓ Ln_{y} (PO₄)₆₋ᵤ(SiO₄)ᵤ X
in which:
- M represents Cs and/or Rb,
- Ln represents at least one trivalent cation,
- X represents at least one anion chosen from amongst 2F⁻, S²⁻, 2Cl⁻, 2Br⁻, 2I⁻, 2OH⁻ and O²⁻, and
- t, x, y, and u are such that:
0 < t ≤ 2.5
2 ≤ x ≤ 8
1 ≤ y ≤ 7
0 < u < 6
x + y + t = 10,
and the total number of positive charges provided by the cations M, Ca and Ln is equal to (20 + u).

2. Material according to claim 1, in which the trivalent cation is chosen among the lanthanides, iron and aluminium.

3. Material according to claim 1 or 2, in which u is equal to 1.

4. Material according to any one of claims 1 to 3, in which t is at most equal to 1.5.

5. Material according to any one of claims 1 to 4, in which X represents (FO_{0.5})²⁻.

6. Material according to any one of claims 1 to 5, in which Ln represents 1) La, 2) La and Fe, or 3) Nd.

7. Material according to any one of claims 1 to 6, in which M represents cesium.

8. Material according to any one of claims 1 to 6, in which M represents Cs and Rb.

9. Material according to claim 2, corresponding to the formula:
Ca₈La_{1.3}Fe_{0.2}Cs_{0.5}(PO₄)₅(SiO₄)₁Fo_{0.5}

10. Material according to claim 3, corresponding to the formula:
Ca₇Nd₂Cs₁(PO₄)₅(SiO₄)₁Fo_{0.5}

11. Material according to claim 3, corresponding to the formula:
Ca₆La_{2.5}Cs_{1.5}(PO₄)₅(SiO₄)₁Fo_{0.5}

12. Material according to claim 3, corresponding to the formula:
Ca₇Nd₂Cs_{0.8}Rb_{0.2}(PO₄)₅(SiO₄)₁Fo_{0.5}

13. Process for containing cesium and/or rubidium in a phosphosilicated apatite corresponding to the following formula:
Mₜ Caₓ Ln_{y}(PO₄)₆₋ᵤ(SiO₄)ᵤ X
in which:
- M represents the Cs and/or Rb to be contained,
- Ln represents at least one trivalent cation,
- X represents at least one anion chosen from amongst 2F⁻, S²⁻, 2Cl⁻, 2Br⁻, 2I⁻, 2OH⁻ and O²⁻, and
- t, x, y and u are such that:
0 < t ≤ 2.5
2 ≤ x ≤ 8
1 ≤ y ≤ 7
0 < u < 6
x + y + t = 10,
and the total number of positive charges provided by the cations M, Ca and Ln is equal to (20 + u), which comprises the following stages:
a) preparation of an intermediate compound of formula:
□ₜ Caₓ Ln_{y} (PO₄)₆₋ᵤ(SiO₄)ᵤ X₁₋ₜ□ₜ
with t, x, y and u having the meanings given above and □ representing a lacuna, by mixture of compounds in stoichiometric quantities containing Ca, Ln, P, O, Si and X and calcination of the mixture at a temperature of 1200 to 1500°C,
b) introduction of Cs and/or Rb in this intermediate compound by mixing a powder of this intermediate compound with a compound of Cs and/or Rb in the quantity required for filling the lacunae, and by calcinating the mixture at a temperature of 700 to 900°C, and
c) densification of the britholite containing the cesium and/or the rubidium obtained in b) by pressure sintering at a temperature of 900 to 1050°C, under a pressure of 25 to 35 MPa.

14. Process according to claim 13, in which the phosphosilicated apatite corresponds to the formula of claim 13 with u equal to 1 and t equal at most to 1.5.

15. Process according to claim 13 or 14, in which the compounds used for preparing the intermediate compound are chosen among the oxides, carbonates, phosphates and fluorides of Ln, Ca and Si.

16. Process according to claim 15, in which the compounds used for preparing the intermediate compound are Ln₂O₃, SiO₂, CaCO₃, Ca₂P₂O₇ and CaF₂.

17. Process according to claim 13 or 14, in which the compounds of Cs and/or Rb used in stage b) are chosen among nitrates and carbonates.

18. Process according to claim 13 or 14, in which the intermediate compound powder used in stage b) has a particle size lower than 10 µm.

19. Process according to any one of claims 13 to 18, in which the cesium comprises cesium 135 and/or cesium 137.
